# EUROPÄISCHE PATENTSCHRIFT

(11) **EP 1 423 272 B1**
(45) Veröffentlichungstag und Bekanntmachung des Hinweises auf die Patenterteilung: **29.12.2004**
(21) Anmeldenummer: 02796184.6
(22) Anmeldetag: 06.08.2002
(51) Int. Cl.: B32B 17/10, B60J 1/00, C03C 27/12

(54) **VERBUNDSICHERHEITSGLASSCHEIBE MIT SOLLBRUCHSTELLE UND EINSCHLAGPUNKT, VERFAHREN ZU DEREN HERSTELLUNG UND DEREN VERWENDUNG**
LAMINATED SAFETY GLASS PANE WITH PREDETERMINED BREAKING POINT AND IMPACT POINT, METHOD FOR THE PRODUCTION AND USE THEREOF
VITRE EN VERRE DE SECURITE FEUILLETE COMPORTANT UN POINT DE RUPTURE ET UN POINT D'IMPACT, PROCEDE DE FABRICATION ET UTILISATION ASSOCIES

(30) Priorität: 21.08.2001 DE 10139959
(43) Veröffentlichungstag der Anmeldung: 02.06.2004
(73) Patentinhaber: Kömmerling Chemische Fabrik GmbH, 66954 Pirmasens (DE); Weidemann Unternehmensgruppe Holding und Geschäftsführungs- Gmbh, 30890 Barsinghausen (DE)
(72) Erfinder: HOLTMANN, Klaus, 30179 Hannover (DE); WEINFURTNER, Hans, 92533 Wernberg-Köblitz (DE); TASSAREK-METZ, Mario, 30916 Isernhagen (DE); SCHWAMB, Michael, 60325 Frankfurt (DE)
(74) Vertreter: Uppena, Franz, Dr.
(86) Internationale Anmeldenummer: PCT/DE2002/002888
(87) Internationale Veröffentlichungsnummer: WO 2003/018311

(56) Entgegenhaltungen:
- DE-C- 10 045 006
- DE-C- 10 119 315

## Beschreibung

Die Erfindung betrifft eine Verbundsicherheitsglasscheibe mit Sollbruchstelle und Einschlagpunkt, die sich z.B. für ein Notausstiegssystem, bzw. Noteinstiegssystem, verwenden lässt, sowie ein Verfahren zur Herstellung einer Verbundsicherheitsglasscheibe mit Sollbruchstelle und die Verwendung der Verbundsicherheitsglasscheibe mit Sollbruchstelle.

Verbundsicherheitsglasscheiben (VSG-Scheiben) mit einem Notausstiegssystem sind aus der DE 4428690 und der US 5350613 bekannt. Solche Verbundsicherheitsglasscheiben bestehen aus mindestens zwei Scheiben mit einer polymeren Zwischenschicht, wobei in der Zwischenschicht eine Sollbruchstelle enthalten ist.

Die in der DE 4428690 beschriebene Sollbruchstelle wird durch eine lokale Schwächung der zwischenliegenden polymeren Schicht dargestellt. Dies wird durch eine Verminderung der Haftung der Schicht am Glas oder aber zwischen unterschiedlichen Lagen der Schicht untereinander erreicht. Diese Lösung weist folgende Nachteile auf:

Wird die Haftung der Schicht an den beiden Glasscheiben reduziert, so ergibt sich im Falle einer Zerstörung der beiden Scheiben ein Spalt, in dem zwar das Glas von der Zwischenschicht abfällt, ein Raumabschluss aber immer noch durch die Zwischenschicht gegeben ist. Diese kann zwar gedehnt werden und reißt auch bei ausreichend hoher Belastung. Dadurch entsteht allerdings immer noch keine ausreichend große Öffnung in der Scheibe, und die Funktion eines Notausstiegs ist nicht gewährleistet. Ein weiteres ungerichtetes Aufreißen der Schicht ist nur dann möglich, wenn die Reißfestigkeit der polymeren Zwischenschicht relativ gering ist, was sich nachteilig auf die Funktion als Verbundsicherheitsglas auswirkt. Wird eine polymere Zwischenschicht mit höherer Reißfestigkeit verwendet, so muß diese unter Umständen mit einem zusätzlichen Werkzeug aufgeschnitten werden (Spalte 3, Absatz 1). Es ist jedoch damit zu rechnen, dass dies im Notfall einem sich evtl. in Panik befindlichen Fahrgast nicht geläufig ist. Durch das ungerichtete Aufreißen der polymeren Zwischenschicht entsteht zudem eine recht kleine Ausstiegsöffnung die von unregelmäßigen Risskanten gesäumt wird. Dadurch ist mit starken Schnittverletzungen beim Ausstieg durch die Öffnung im Glas zu rechnen.

Wird die Haftung zwischen unterschiedlichen Bereichen der polymeren Zwischenschicht weiter reduziert, so reduziert sich zwar der Aufwand zur Schaffung eines offenen Schlitzes in der Glasscheibe. Solch ein Schlitz ist jedoch immer noch nicht ausreichend, um schnell eine Notausstiegsöffnung schaffen zu können. Die Problematik der unorientierten Rissausbreitung in der polymeren Zwischenschicht bleibt ebenso erhalten, wie die begrenzte Reißfestigkeit der Zwischenschicht.

Um beide Scheiben der Verbundsicherheitsglaseinheit zu zertrümmern, ist ein dafür vorgesehener spitzer Hammer erforderlich. Bei einem stumpfen Schlagwerkzeug wirkt die Zwischenschicht als Stoßabsorber und es ist nicht möglich, durch die polymere Zwischenschicht zu der Oberfläche der zweiten Scheibe zu gelangen. Daher ist es mit einem anderen Werkzeug als mit einem spitzen Hammer (ESG Hammer) sehr schwer bis unmöglich, die zweite Glasscheibe zu zerstören.

Der Einsatz von Floatglas in der beschriebenen Verbundglasscheibe mit Notausstiegssystem ist nicht zu empfehlen, da sich beim Zertrümmern von Floatglas dolchartige scharfkantige Scherben bilden (zusätzliche Verletzungsgefahr) und diese dolchartigen Scherben die Sollbruchstelle überbrücken und somit deren Funktion einschränken.

Ein weiterer Nachteil besteht in der nur geringen Reißfestigkeit der Zwischenschicht. Dadurch kann es nach Herauslösen eines Scheibenteiles durch das Eigengewicht des noch im Rahmen verbliebenen Scheibenteiles zum Abreißen desselben kommen, was zu Verletzungen führen kann.

Die im US-Patent 5350613 beschriebene Verbundglasscheibe mit Sollbruchstelle ist mit folgenden Nachteilen behaftet: Die Durchdringung beider Scheiben am "Einschlagpunkt" mit nur einem Schlag ist nur mit einem ESG Hammer mit entsprechend langem Dorn möglich. Ein derartiger Hammer kann allerdings als Waffe gebraucht werden und wird deshalb als Sicherheitsrisiko eingestuft.

Die Sollbruchstelle wird mit doppelseitig klebendem Klebeband aus einem Schaumstoff ausgeführt. Die starke Dehnbarkeit und Komprimierbarkeit des Schaumstoffes kann zu Schwierigkeiten bei der Fertigung der Scheiben führen, da beim Befüllen mit Gießharz der hydrostatische Druck im Bereich der Sollbruchstelle zu einer Veränderung der Schichtstärke führt.

Eine geborstene Scheibe wird nur durch zwischen den Schaumstoffstücken bestehende Brücken aus ausgehärtetem reißfestem Gießharz zusammengehalten. Die Resttragfähigkeit solch einer geborstenen Scheibe kann bei Verwendung einer nicht genügend reißfesten Zwischenschicht ungenügend sein, was z.B. zum Abreißen der herausgelösten Glasbruchschicht und Herabfallen derselben auf Personen führen kann. Wird dagegen eine sehr reißfeste Zwischenschicht verwendet, wie sie zur Erreichung einer hohen Resttragfähigkeit benötigt würde, besteht die Gefahr, dass die Brücken aus Gießharz bei Belastung nicht reißen, was die Funktion des Notausstiegs einschränkt.

Die EP 1002641 A1 beschreibt ein Fahrzeugfenster aus Verbundsicherheitsglas mit zwei durch eine Zwischenschicht verbundenen Einscheibensicherheitsgläsern, wobei die Zwischenschicht durch Diskontinuitäten in der Zwischenschicht dargestellte Sollbruchlinien (= Sollbruchstelle) enthält, und die Zwischenschicht in einem Randbereich des Verbundsicherheitsglases derart undurchtrennbar und flexibel ausgebildet ist, dass beim Durchtrennen der Sollbruchlinien ein reißfest und schwenkbar mit dem Fahrzeug verbundener Notausstiegsflügel gebildet wird. Die EP 1002641 A1 gibt an, im Bedarfsfall das Verbundsicherheitsglas mit einem geeigneten Werkzeug zu zertrümmern, wobei zu diesem Zweck im Wageninneren in der Nähe des Fensters ein Spitzhammer angebracht ist. Von Nachteil dieser Anordnung ist ebenfalls, dass Die Durchdringung beider Scheiben am "Einschlagpunkt" mit nur einem Schlag nur mit einem ESG Hammer mit entsprechend langem Dorn möglich ist. Ein derartiger Hammer kann allerdings als Waffe gebraucht werden und wird deshalb als Sicherheitsrisiko eingestuft.

Aufgabe der vorliegenden Erfindung ist es, die beschriebenen Nachteile des Standes der Technik zu vermeiden und insbesondere eine Verbundsicherheitsglasscheibe (VSG-Scheibe) zu schaffen, bei der ohne spezielles Werkzeug eine Notausstiegsöffnung in der Scheibe hergestellt werden kann, um Personen im Inneren eines Fahrzeugs oder eines Gebäudes die Möglichkeit zu geben, dieses im Notfall durch diese Öffnung zu verlassen, bzw. Rettungskräften die Möglichkeit zu geben, ohne Spezialwerkzeug in das Innere eines Fahrzeugs oder eines Gebäudes vorzudringen.

Gelöst wird die Aufgabe durch eine Verbundsicherheitsglasscheibe mit einer Sollbruchstelle und einem Einschlagpunkt, enthaltend mindestens zwei vorgespannte Glasscheiben und eine Zwischenschicht, wobei in der Zwischenschicht durch Diskontinuitäten gebildete Sollbruchlinien (= die Sollbruchstelle) zur Schaffung eines Notausstiegs vorhanden sind und die Zwischenschicht an einer Stelle (z.B. einer Seite) des Verbundsicherheitsglases derart undurchtrennbar und flexibel ausgebildet ist, dass beim Durchtrennen der Sollbruchlinien ein reißfest und nach Art eines Scharniergelenkes schwenkbar mit der Restscheibe verbundener Notausstiegsflügel gebildet wird, und wobei die Verbundglasscheibe in der Zwischenschicht an mindestens einer Stelle (am Einschlagpunkt) einen oder mehrere Körper eines Materials enthält, dessen Härte höher ist als die des verwendeten Glases. Bevorzugt enthält die Zwischenschicht am Einschlagpunkt eine Aussparung, z.B. von kreisrunder Geometrie, in der die harten Körper angeordnet sind. Bevorzugt sind diese in einen weichen, plastischen Kunststoff eingebettet. Dieser "Einbettungskunststoff" kann ein ausgehärtetes Gießharz mit entsprechenden Eigenschaften und/oder eine polymere Folie, z.B. aus Polyisobutylen sein.

Als Glasscheiben können eingesetzt werden Flachgläser aus der Gruppe der Alkali-Kalk-Gläser, wie Kalknatronglas (z.B. nach DIN EN 572, 1 - 7), oder Borosilikatgläser. Die Glasscheiben sind vorgespannt oder teilvorgespannt. Die (Teil)Vorspannung kann thermisch (nach DIN EN 12150, 96/2 und/oder DIN EN 1863/1 2000/3 und/oder DIN EN 13024/1 98/1), oder chemisch erfolgen. Bevorzugt haben die Glasscheiben eine Dicke von 0,1 bis 12 mm und besonders bevorzugt von 0,5 bis 6 mm. Optimal ist eine Dicke von 1 bis 4 mm.

Unter einer Diskontinuität in der Zwischenschicht wird im vorliegenden Zusammenhang eine Unterbrechung der durch die Zwischenschicht vermittelnden Verbindung zwischen den beiden Glastafeln verstanden. Aufgrund der fehlenden Verbindung stellt eine Diskontinuität eine Schwächungslinie oder Sollbruchlinie (= Sollbruchstelle) dar. Diskontinuitäten können in Form zusammenhängender Linien, Streifen oder länglichen Flächenbereichen in der Zwischenschicht ausgebildet sein.

Im Notfall können beide Glasscheiben mit einem Schlag mittels eines stumpfen Körpers, z.B. Gummihammer, auf den Einschlagpunkt zerstört werden. Dies wird durch den oder die sich am Einschlagpunkt im VSG-Scheibenzwischenraum befindlichen Körper eines Materials, dessen Härte höher ist als die des Glases, erreicht. Bevorzugt haben die Körper eine Mohs'sche Härte von > 6, besonders bevorzugt von > 7. Bevorzugt bestehen die harten Körper aus Körnern oder Kugeln. Besonders bevorzugt sind Körner, die idealerweise scharfkantig sind. Eingesetzt werden können z.B. Körper aus Siliziumcarbid oder Korund. Dabei können die harten Körper mittels eines weichen, plastischen Materials (wie z.B. Polyisobutylen, auch Butyl genannt) fest zwischen den beiden außenliegenden Glasscheiben in den dafür vorgesehenen Raum eingebracht werden. Bevorzugt ist, die Körpergröße so zu wählen, dass diese 0,1 bis 0,3 mm, besonders bevorzugt 0,1 mm kleiner ist als die Dicke der Zwischenschicht.

Wird nun im Bereich des Einschlagpunktes impulsartig ein hoher Druck aufgebaut z. B. durch den Schlag mit einem stumpfen Körper, so werden die harten Körper durch die lokale Durchbiegung der Scheibe im Bereich des Hammerschlags mit einem ausreichend hohen Druck gegen beide Scheibenoberflächen gepresst. Dabei bildet sich unter dem oder den eindringenden Körpern ein Riss im Glas senkrecht zur Glasoberfläche. Erreicht die Rissspitze die Zugspannungszone des vorgespannten Glases, so bricht die gesamte Scheibe in bekannter Weise. Anschließend ist die Öffnung des Notausstiegs an der Sollbruchstelle möglich. Durch Aufbringen einer Kraft in der Nähe der Sollbruchstelle (z.B. durch einfaches Drücken mit der Hand) ist es möglich, eine Öffnung des Notausstiegs zu erzielen.

Beispielhaft können für die bruchmechanischen Eigenschaften und die Härte der Zwischenschicht folgende Werte angegeben werden:

| | | |
|---|---|---|
| Reißfestigkeit | mindestens 4 MPa, | bevorzugt min. 10 MPa; |
| Reißdehnung | mindestens 200 %, | bevorzugt min. 300 %; |
| Weiterreißfestigkeit | mindestens 6 N/mm, | bevorzugt min. 15 N/mm; |
| Shore-A Härte | 30 bis 70, | bevorzugt 40 bis 60. |

Die Zwischenschicht kann aus einem Kunststoff hergestellt werden. Dieser Kunststoff kann eine thermoplastische Klebefolie enthalten, bzw. aus dieser bestehen. Inhaltsstoffe der Klebefolie können aus der Gruppe der Polyvinylacetale oder Polyurethane ausgewählt werden.

Ein Verfahren zur Herstellung einer erfindungsgemäßen Verbundsicherheitsglasscheibe mit einer Sollbruchstelle kann wie folgt angegeben werden:

Aus einer polymeren Folie werden Sollbruchlinien und mindestens ein Bereich, der später die harten Körper enthält (Einschlagpunkt), ausgeschnitten oder ausgestanzt. Bevorzugt hat die Sollbruchstelle die Form von drei Seiten eines Rechteckes, welches sich innerhalb der Glastafelfläche befindet. Eine thermisch vorgespannte Glastafel wird mit einer Randabdichtung versehen, und auf die Glastafel wird die vorbereitete Folie als Zwischenschicht aufgelegt. Am Einschlagpunkt werden ein oder mehrere harte Körper, welche eine höhere Härte als die des Glases aufweisen, plaziert. Bevorzugt geschieht dies in einer Einbettung der harten Körper in Polyisobutylen, deren Herstellung weiter unten beschrieben wird. Auf diese Anordnung wird eine zweite thermisch vorgespannte Glastafel deckungsgleich abgelegt. Der so hergestellte Verbund wird in bekannter Weise zwischen Walzenpaaren durch eine Wärmezone bewegt. Noch im Verbund enthaltene Luft wird anschließend durch Behandeln des Verbundes in einem Autoklaven entfernt.

Die entstandene VSG-Scheibe mit Notausstiegssystem kann als einzelne VSG-Scheibe weiterverarbeitet werden. Auch kann die entstandene VSG-Scheibe mit Sollbruchstelle in gewöhnlichem Mehrscheibenisolierglas weiterverarbeitet werden, wobei eine oder mehrere Scheiben des Mehrscheibenisolierglases aus der erfindungsgemäßen VSG-Scheibe mit Sollbruchstelle bestehen können.

Verwendung finden kann die erfindungsgemäße VSG-Scheibe in Gebäuden sowie Schienen-, Straßen- und Wasserfahrzeugen.

Die Einbettung der harten Körper in Polyisobutylen (zur Verwendung als Einschlagpunkt) kann folgendermaßen hergestellt werden:

Aus einem Butyldichtstoff (Dichtstoff, enthaltend ein Homo-, Co- oder Terpolymer des Isobutylens oder Mischungen davon, oder ein Copolymer von Acrylaten oder Methacrylaten oder Mischungen davon, evtl. zusammen mit anderen üblichen Zusatzstoffen; z.B. Naftotherm TPS der Chemetall GmbH) wird eine dünne Folie gefertigt. Dies kann in einer Plattenpresse erfolgen, indem ein Würfel des Dichtstoffes mit ca. 10 mm Kantenlänge auf eine Dicke von 0,8 mm gepresst wird. Dies geschieht bevorzugt mittels zweier Pressplatten aus Metall und einem Abstandhalter aus Metall von 0,8 mm Dicke. Aus der so hergestellten Folie werden runde Folienteile, sogenannte Pads, ausgestanzt (Durchmesser ca. 30 mm). Auf ein waagerecht liegendes Pad werden dann ein oder mehrere harte Körper, z.B. SiC-Kömer, in die Mitte des Pad plaziert. In Versuchen hat sich eine Anzahl von 10 bis 30 SiC-Körner als sehr gut erwiesen. Als SiC-Körner können z.B. SiC-Körner der ESK-SIC GmbH Qualität F14 (1,70 mm 20 %, 1,40 mm 45 %, 1,18 mm 70 %) oder Qualität F16 (1,40 mm 20 %, 1,18 mm 45 %, 1,00 mm 70 %) eingesetzt werden. Empfehlenswert ist eine Siebung der Körner, um Komgrößen, die über der maximalen Korngröße liegen (diese richtet sich nach dem Abstand der beiden Glastafeln), auszuschließen. Anschließend wird ein zweites Pad deckungsgleich auf das erste über den harten Körpern abgelegt. Dieses Gebilde wird zwischen zwei Metallplatten auf eine Dicke von ca. 1,6 mm verpresst. Aus diesem Pressling wird die als Einschlagpunkt einsetzbare Körpereinbettung in Polyisobutylen mit einem Durchmesser von ca. 30 mm ausgestanzt. Aus Gründen der Eigenklebrigkeit des Butyldichtstoffes erfolgt das Handling vorzugsweise mit Hilfe von Silikonpapier.

Bevorzugt enthält die Verbundsicherheitsglasscheibe mit Sollbruchstelle eine Randabdichtung aus einem thermoplastischen, bei Raumtemperatur dauerplastischen Material. Dieses Material kann aus einem nicht vernetzen oder teilvernetzten Polymer gebildet werden. Die Basis des Polymeren kann z.B. durch Homo, Co- oder Terpolymere des lsobutylens oder Mischungen davon, sowie durch Copolymere von Acrylaten oder Methacrylaten oder Mischungen davon gebildet werden (Basispolymer).

Weitere Inhaltsstoffe des thermoplastischen Materials können sein thermoplastische Polymere, natürliche und synthetische Kautschuke, klebrigmachende Zusätze, Weichmacher, Haftvermittler, verstärkende und nichtverstärkende Füllstoffe, Stabilisatoren, Trockenmittel und andere Zusätze.

Homopolymere des Isobutylens sind Polyisobutylene, die kommerziell in verschiedenen Molekulargewichtsbereichen erhältlich sind. Beispiele für Polyisobutylen-Handelsnamen sind Oppanol (BASF AG), Vistanex (Exxon) oder Efrolen (Efremov). Der Zustand der Polyisobutylene reicht von flüssig über weichharzartig bis kautschukartig. Die Molekulargewichtsbereiche können wie folgt angegeben werden: Der Zahlenmittelwert der Molmasse beträgt 2.000 bis 1.000.000 g/mol, bevorzugt 24.000 bis 600.000 g/mol, und der Viskositätsmittelwert der Molmasse beträgt 5.000 bis 6.000.000 g/mol, bevorzugt 40.000 bis 4.000.000 g/mol.

Co- und Terpolymere des Isobutylens beinhalten als Co- und Termonomere 1,3-Diene, wie Isopren, Butadien, Chloropren oder β-Pinen, funktionelle Vinylverbindungen, wie Styrol, α-Methylstyrol, p-Methylstyrol oder Divinylbenzol, oder weitere Monomere. Ein Beispiel für ein Copolymer aus Isobutylen und Isopren ist Butylkautschuk mit geringen Anteilen an Isopren; kommerziell erhältlich sind z.B. diverse Butyl-Typen der Firmen Bayer AG, Exxon Chemical oder Kautschuk-Gesellschaft. Terpolymere des Isobutylens mit den Monomeren Isopren und Divinylbenzol ergeben teilvemetzte Butylkautschuk-Typen, die auch durch nachträgliche Vernetzung von Butylkautschuk erhältlich sind; kommerziell erhältlich sind z.B. LC Butyl von Exxon Chemical, Kalar von Hardman oder Polysar Butyl XL von Bayer AG. Die Homo-, Co- und Terpolymeren von Isobutylen können auch einer nachträglichen chemischen Modifizierung unterworfen werden; bekannt ist die Umsetzung von Butylkautschuk mit Halogenen (Chlor, Brom), die zu Chlor- bzw. Brombutylkautschuk führt. Ähnlich erfolgt die Umsetzung eines Copolymeren aus Isobutylen und p-Methylstyrol mit Brom zu dem Terpolymer aus Isobutylen, p-Methylstyrol und p-Bromomethylstyrol, das kommerziell erhältlich ist unter dem Handelsnamen EXXPRO von Exxon Chemical.

Homo- oder Copolymere von Acrylaten oder Methacrylaten (Poly(meth)acrylate) sind Polymere der Ester von Acryl- bzw. Methacrylsäure und können beispielsweise als Alkoholkomponente eine mit funktionellen Gruppen substituierte oder unsubstituierte Alkylgruppe, z.B. Methyl, Ethyl, Propyl, iso-Propyl, n-Butyl, iso-Butyl, tert-Butyl, Pentyl und Hexyl und deren Isomeren und höheren Homologen, 2-Ethylhexyl, Phenoxyethyl, Hydroxyethyl, 2-Hydroxypropyl, Caprolactonhydroxyethyl, Dimethylaminoethyl, umfassen. Eingeschlossen sind auch Polymere der Acrylsäure, der Methacrylsäure, von Amiden der genannten Säuren und von Acrylnitril. Es können auch teilvemetzte Poly(meth)acrylate, bei denen die Vernetzung über ein mehrfunktionelles Monomer mit z.B. Diethylenglycol oder Trimethylolpropan als Alkoholkomponente erfolgt, und Mischungen der Polyacrylate und der Polymethacrylate verwendet werden.

Beispiele für thermoplastische Polymere sind Polyolefine als Homo- und Copolymere, aufgebaut aus den Monomeren Ethylen, Propylen, n-Buten und deren höheren Homologen und Isomeren und aus funktionellen Vinylverbindungen wie Vinylacetat, Vinylchlorid, Styrol und α-Methylstyrol. Weitere Beispiele sind Polyamide, Polyimide, Polyacetale, Polycarbonate, Polyester und Polyurethane und Mischungen der erwähnten Polymere.

Natürliche und synthetische Kautschuke können ausgewählt werden aus der Gruppe der Homopolymeren von Dienen, der Gruppe der Co- und Terpolymeren von Dienen mit Olefinen und der Gruppe der Copolymeren von Olefinen. Beispiele sind Polybutadien, Polyisopren, Polychloropren, Styrol-Butadien-Kautschuk, Blockcopolymere mit Blöcken aus Styrol und Butadien oder Isopren, Ethylen-Vinylacetat-Kautschuk, Ethylen-Propylen-Kautschuk und Ethylen-Propylen-Dien-Kautschuk, beispielsweise mit Dicyclopentadien oder Ethylidennorbornen als Dien-Komponente. Die Kautschuke können auch in hydrierter Form und auch in Mischungen eingesetzt werden.

Klebrigmachende Zusätze können ausgewählt werden aus der Gruppe der natürlichen und synthetischen, auch nachträglich modifizierten Harze, die unter anderem Kohlenwasserstoffharze, Kolophonium und dessen Derivate, Polyterpene und deren Derivate, Cumaron-Indenharze und Phenolharze umfassen, und aus der Gruppe der Polybutene, der Polyisobutene und der abgebauten flüssigen Kautschuke (z.B. Butylkautschuk oder EPDM), die auch hydriert sein können. Es können auch Mischungen der aufgeführten klebrig machenden Zusätze eingesetzt werden.

Beispiele für Weichmacher sind Ester der Phthalsäure (z.B. Di-2-ethylhexyl-, Diisodecyl-, Diisobutyl- oder Dicyclohexyl-phthalat), der Phosphorsäure (z.B. 2-Ethylhexyl-diphenyl-, Tri-(2-ethylhexyl)- oder Tricresyl-phosphat), der Trimellitsäure (z.B. Tri(2-ethylhexyl)- oder Trüsononyl-trimelütat), der Citronensäure (z.B. Acetyltributyl- oder Acetyltriethyl-citrat) oder von Dicarbonsäuren (z.B. Di-2-ethylhexyl-adipat oder Dibutylsebacat). Es können auch Mischungen der Weichmacher eingesetzt werden.

Haftvermittelnde Substanzen können ausgewählt werden aus der Gruppe der Silane, die beispielsweise 3-Glycidyloxypropyl-trialkoxysilan, 3-Aminopropyl-trialkoxysilan, N-Aminoethyl-3-aminopropyl-trialkoxysilan, 3-Methacryloxypropyl-trialkoxysilan, Vinyltrialkoxysilan, iso-Butyl-trialkoxysilan, 3-Mercaptopropyltrialkoxysilan umfassen können, aus der Gruppe der Kieselsäureester, z.B. Tetraalkylorthosilikate, und aus der Gruppe der Metallate, z.B. Tetraalkyltitanate oder Tetraalkylzirkonate, sowie Mischungen der aufgeführten haftvermittelnden Substanzen.

Stabilisatoren können Antioxidantien vom Typ der sterisch gehinderten Phenole (z.B. Tetrakis[methylen-3-(3,5-di-tert-butyl-4-hydroxyphenyl)- propionat]methan) oder vom Typ der schwefelbasierenden Antioxidantien wie Mercaptane, Sulfide, Polysulfide, Thioharnstoff, Mercaptale, Thioaldehyde, Thioketone usw. sein, oder UV-Schutzmittel vom Typ der Benzotriazole, Benzophenone oder vom HALS-Typ (Hindered Amine Light Stabilizer) oder Ozonschutzmittel sein. Diese können entweder alleine oder in Mischungen eingesetzt werden.

Beispiele für verstärkende und nichtverstärkende Füllstoffe sind pyrogene oder gefällte Kieselsäure, Kieselgel, gefällte oder gemahlene Kreide (auch oberflächenbehandelt), Ton, Kaolin, Talkum, Quarz, Zeolithe, Titandioxid, Glasfasern oder Aluminium- und Zinkpulver und Mischungen davon. Wenn eine dunkle Farbe des die Sollbruchstelle bildenden Kunststoffes nicht als störend empfunden wird, können auch Ruß, Kohlenstofffasem oder Graphit eingesetzt werden.

Als Trockenmittel können wasserbindende Füllstoffe eingesetzt werden, wie z.B. Calciumoxid oder Zeolithe. Bevorzugt sind Zeolithe, die sehr effektiv Wasser binden können, aber nicht zur Aufnahme von Gasen wie Stickstoff, Sauerstoff oder Argon geeignet sind. Solche Zeolithe haben z.B. einen Porendurchmesser von 3 Angström Es können auch Mischungen der Trockenmittel eingesetzt werden.

Eine bevorzugt verwendete Ausführung des thermoplastischen Materials hat folgende Inhaltsstoffe (Angaben in Gew.-%):

| | |
|---|---|
| a) Basispolymer | 30 -100 |
| b) thermoplastische Polymere | 0 - 50 |
| c) natürliche und synthetische Kautschuke | 0 - 50 |
| d) klebrigmachende Zusätze | 0 - 30 |
| e) Weichmacher | 0 - 50 |
| f) Haftvermittler | 0 - 5 |
| g) Stabilisatoren | 0 - 5 |
| h) verstärkende und nichtverstärkende Füllstoffe | 0 - 70 |
| i) Trockenmittel | 0 - 40 |

Besonders bevorzugt enthält das verwendete Material folgende Inhaltsstoffe:

| | |
|---|---|
| a) Basispolymer | 40 - 100 |
| b) thermoplastische Polymere | 0 - 30 |
| c) natürliche und synthetische Kautschuke | 0 - 30 |
| d) klebrigmachende Zusätze | 0 - 25 |
| e) Weichmacher | 0 - 30 |
| f) Haftvermittler | 0 - 3 |
| g) Stabilisatoren | 0 - 3 |
| h) verstärkende und nichtverstärkende Füllstoffe | 0 - 60 |
| i) Trockenmittel | 0 - 20 |

Von Vorteil der Randabdichtung in der beschriebenen Verbundsicherheitsglasscheibe mit Sollbruchstelle ist, dass die Randabdichtung die Hohlräume (Diskontinuitäten) gegen eindringende Feuchtigkeit absperrt und, falls sie ein Trockenmittel enthält, das in den Hohlräumen befindlichen Gas, in der Regel Luft, trocknet. Auch schützt sie die Zwischenschicht vor Feuchtigkeit, was letztlich Eintrübungen der Zwischenschicht vermeidet. Weiterhin verhindert die Randabdichtung die Diffusion von Weichmachern (z.B. aus die Verbundsicherheitsglasscheibe umgebenden Halterungen) in die Zwischenschicht und die Hohlräume der Zwischenschicht, was ebenfalls Eintrübungen der Zwischenschicht vermeidet.

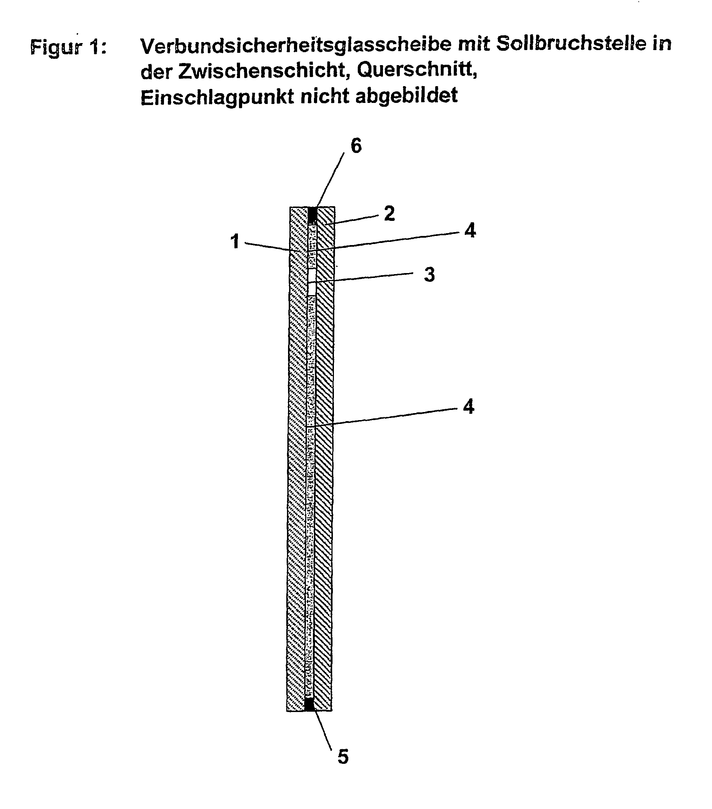

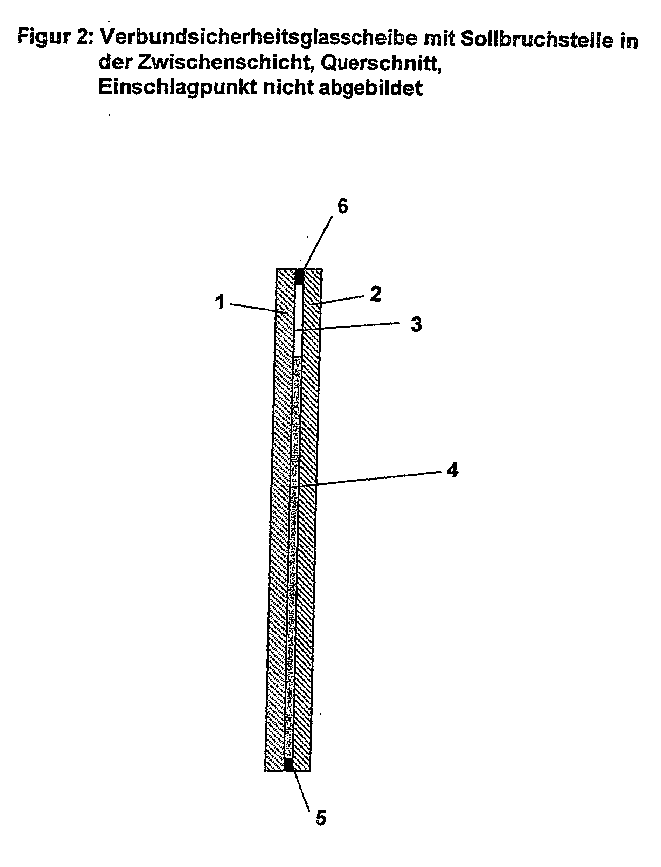

### Bezugszeichenliste zu Figur 1 und zu Figur 2:

**1 - Einscheibensicherheitsglastafel**
**2 - Einscheibensicherheitsglastafel**
**3 - Diskontinuität, Hohlraum = Sollbruchstelle**
**4 - Zwischenschicht**
**5 - Randabdichtung**
**6 - Randabdichtung**

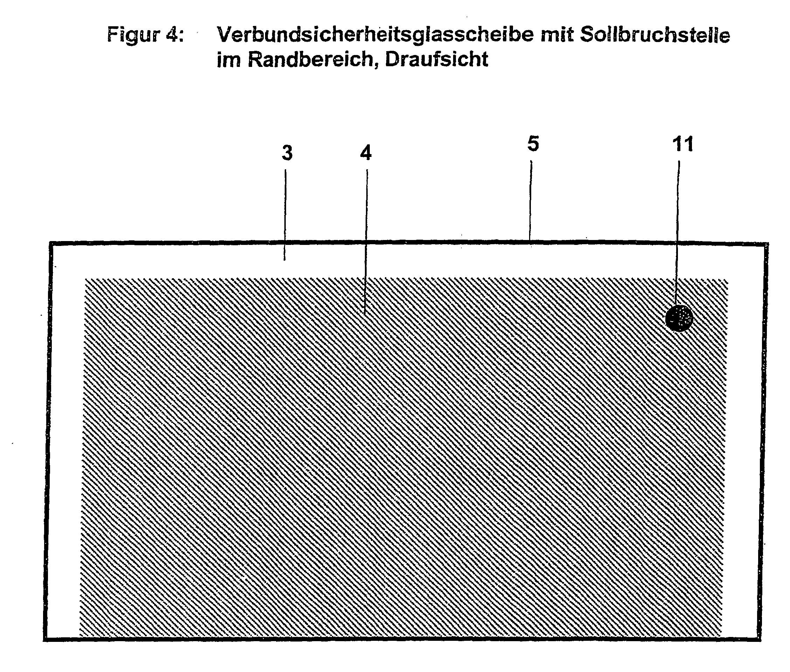

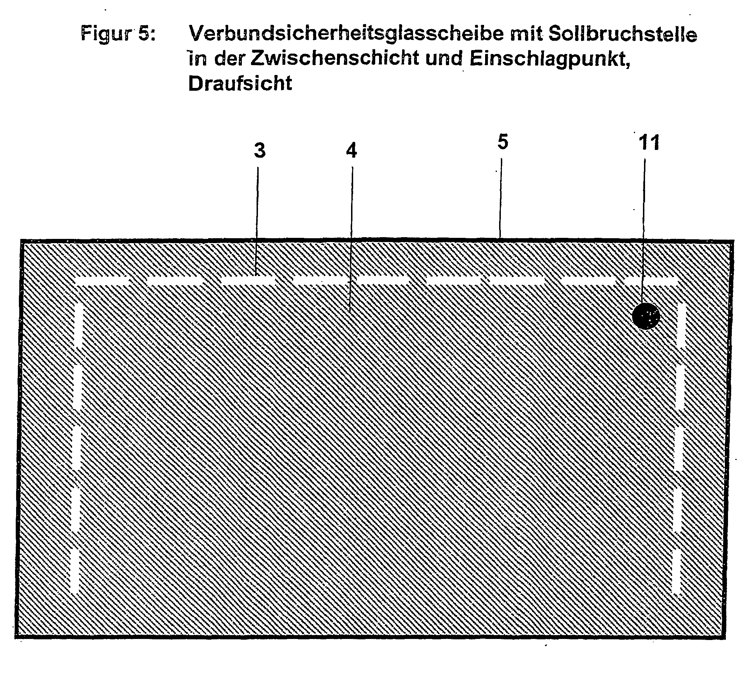

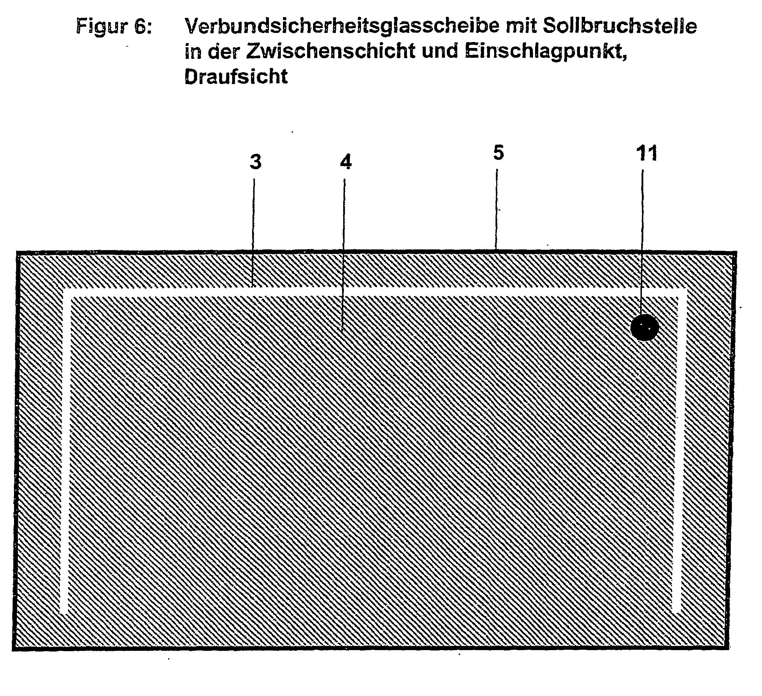

### Bezugszeichenliste zu Figuren 4, 5 und 6:

**3 - Diskontinuität, Hohlraum = Sollbruchstelle**
**4 - Zwischenschicht**
**5 - Randabdichtung**
**11 - Anschlagstelle; Einschlagpunkt**

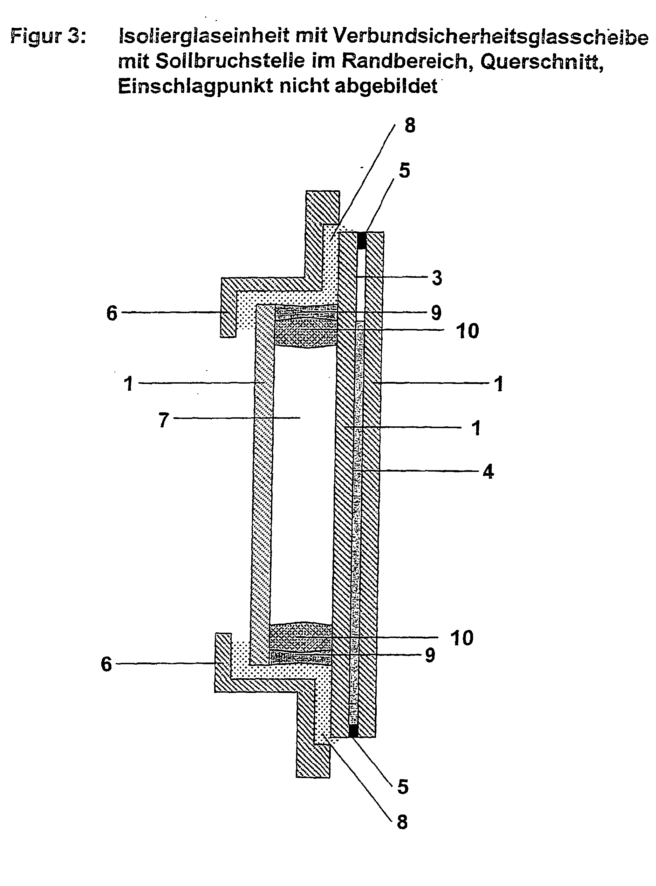

### Bezugszeichenliste zu Figur 3:

**1 - Einscheibensicherheitsglastafel**
**3 - Diskontinuität, Hohlraum = Sollbruchstelle**
**4 - Zwischenschicht**
**5 - Randabdichtung**
**6 - Rahmen**
**7 - Scheibenzwischenraum**
**8 - Verglasungsdichtstoff**
**9 - Isolierglassekundärdichtstoff**
**10 - Abstandhalter**

## Patentansprüche

1. Verbundsicherheitsglasscheibe mit einer Sollbruchstelle und einem Einschlagpunkt, enthaltend mindestens zwei vorgespannte Glasscheiben und eine Zwischenschicht, wobei durch Diskontinuitäten in der Zwischenschicht gebildete Sollbruchlinien (= die Sollbruchstelle) zur Schaffung eines Notausstiegs vorhanden sind und die Zwischenschicht an einer Stelle (z.B. einer Seite) des Verbundsicherheitsglases derart undurchtrennbar und flexibel ausgebildet ist, dass beim Durchtrennen der Sollbruchlinien ein reißfest und nach Art eines Schamiergelenkes schwenkbar mit der Restscheibe verbundener Notausstiegsflügel gebildet wird, **dadurch gekennzeichnet, dass** die Verbundglasscheibe in der Zwischenschicht an mindestens einer Stelle (dem Einschlagpunkt) einen oder mehrere Körper eines Materials enthält, dessen Härte höher ist als die des verwendeten Glases.

2. Verbundsicherheitsglasscheibe mit einer Sollbruchstelle nach Anspruch 1, **dadurch gekennzeichnet, dass** als Glasscheiben Flachgläser aus der Gruppe der Alkali-Kalk-Gläser, wie Kalknatronglas, oder Borosilikatgläser ausgewählt sind.

3. Verbundsicherheitsglasscheibe mit einer Sollbruchstelle nach Anspruch 1 oder 2, **dadurch gekennzeichnet, dass** die Mohs'sche Härte des oder der harten Körper am Einschlagpunkt > 6 ist.

4. Verbundsicherheitsglasscheibe mit einer Sollbruchstelle nach Anspruch 3, **dadurch gekennzeichnet, dass** die Mohs'sche Härte des oder der harten Körper am Einschlagpunkt > 7 ist.

5. Verbundsicherheitsglasscheibe mit einer Sollbruchstelle nach einem oder mehreren der Ansprüche 1 bis 4, **dadurch gekennzeichnet, dass** die harten Körper aus Körnern oder Kugeln bestehen.

6. Verbundsicherheitsglasscheibe mit einer Sollbruchstelle nach einem oder mehreren der Ansprüche 1 bis 5, **dadurch gekennzeichnet, dass** der oder die harten Körper am Einschlagpunkt aus Siliziumcarbid und/oder aus Korund bestehen.

7. Verbundsicherheitsglasscheibe mit einer Sollbruchstelle nach einem oder mehreren der Ansprüche 1 bis 6, **dadurch gekennzeichnet, dass** die harten Körper eine Größe aufweisen, die 0,1 bis 0,3 mm kleiner ist als die Dicke der Zwischenschicht.

8. Verbundsicherheitsglasscheibe mit einer Sollbruchstelle nach einem oder mehreren der Ansprüche 1 bis 7, **dadurch gekennzeichnet, dass** die harten Körper in Polyisobutylen eingebettet sind.

9. Verbundsicherheitsglasscheibe mit einer Sollbruchstelle nach einem oder mehreren der Ansprüche 1 bis 8, **dadurch gekennzeichnet, dass** die Zwischenschicht aus einem Kunststoff mit folgenden bruchmechanischen Eigenschaften gebildet wird: Reißfestigkeit mindestens 4 MPa, Reißdehnung mindestens 200 %, Weiterreißfestigkeit mindestens 6 N/mm, Shore-A Härte (nach DIN 53505 an 6 mm dicken Probenkörpem bei 23 °C bestimmt) 30 bis 70.

10. Verbundsicherheitsglasscheibe mit einer Sollbruchstelle nach einem oder mehreren der Ansprüche 1 bis 9, **dadurch gekennzeichnet, dass** die Zwischenschicht ein Gießharz und/oder eine polymere Folie enthält.

11. Verbundsicherheitsglasscheibe mit einer Sollbruchstelle nach Anspruch 10, **dadurch gekennzeichnet, dass** das Gießharz zur Herstellung der Zwischenschicht auf Polyacrylat basiert.

12. Verbundsicherheitsglasscheibe mit einer Sollbruchstelle nach einem oder mehreren der Ansprüche 1 bis 11, **dadurch gekennzeichnet, dass** die Verbundsicherheitsglasscheibe eine Randabdichtung aus einem thermoplastischen, bei Raumtemperatur dauerplastischen Material enthält.

13. Verfahren zur Herstellung einer Verbundsicherheitsglasscheibe mit einer Sollbruchstelle, **dadurch gekennzeichnet, dass**
a) aus einer polymeren Folie Sollbruchlinien und mindestens ein Bereich, der später die harten Körper enthält (Einschlagpunkt), ausgeschnitten oder ausgestanzt werden,
b) eine thermisch vorgespannte Glastafel mit einer Randabdichtung versehen wird,
c) auf die Glastafel die unter a) vorbereitete Folie als Zwischenschicht aufgelegt wird,
d) auf die Glastafel am Einschlagpunkt ein oder mehrere harte Körper, welche eine höhere Härte als die des Glases aufweisen, aufgebracht werden,
e) auf diese Anordnung eine zweite thermisch vorgespannte Glastafel abgelegt wird und
f) der entstandene Glastafelverbund verpresst wird.

14. Verwendung einer Verbundsicherheitsglasscheibe mit einer Sollbruchstelle nach einem der Ansprüche 1 bis 11 in Gebäuden, Schienenfahrzeugen, Straßenfahrzeugen und Wasserfahrzeugen.

## Claims

1. Laminated safety glass pane having a predetermined breaking location and an impact point, which contains at least two toughened glass panes and an intermediate layer, wherein predetermined breaking lines (= the predetermined breaking location), which are formed by discontinuities in the intermediate layer, are present in order to create an emergency exit, and, the intermediate layer is embodied in one location (for example on one side) of the laminated safety glass such as to be flexible and not able to be broken through, such that when the predetermined breaking lines are broken through, an emergency exit flap is formed which is connected to the remainder of the pane in a tear-resistant manner and in a manner pivotable therewith by means of a hinged joint, **characterised in that** the laminated glass pane contains, in at least one location (at the impact point) in the intermediate layer, one or more bodies made of a material whereof the hardness is greater than that of the glass used.

2. Laminated safety glass pane having a predetermined breaking location according to Claim 1,
**characterised in that**, as the glass panes, flat glasses are selected from the group of alkali-lime glasses, such as soda-lime glass, or borosilicate glasses.

3. Laminated safety glass pane having a predetermined breaking location according to Claim 1 or 2,
**characterised in that** the Mohs' hardness of the hard body or hard bodies at the impact point is > 6.

4. Laminated safety glass pane having a predetermined breaking location according to Claim 3,
**characterised in that** the Mohs' hardness of the hard body or bodies at the impact point is > 7.

5. Laminated safety glass pane having a predetermined breaking location according to one or more of Claims 1 to 4, **characterised in that** the hard bodies consist of grains or spheres.

6. Laminated safety glass pane having a predetermined breaking location according to one or more of Claims 1 to 5, **characterised.in that** the hard body or bodies at the impact point consists/consist of silicon carbide and/or corundum.

7. Laminated safety glass pane having a predetermined breaking location according to one or more of Claims 1 to 6, **characterised in that** the size of the hard bodies is from 0.1 to 0.3 mm smaller than the thickness of the intermediate layer.

8. Laminated safety glass pane having a predetermined breaking location according to one or more of Claims 1 to 7, **characterised in that** the hard bodies are embedded in polyisobutylene.

9. Laminated safety glass pane having a predetermined breaking location according to one or more of Claims 1 to 8, **characterised in that** the intermediate layer is formed from a plastics material having the following mechanical fracturing properties: tear resistance at least 4 MPa, elongation at break of at least 200%, tear propagation resistance of at least 6 N/mm, Shore A hardness (in accordance with DIN 53505, determined at 23°C on 6 mm-thick test specimens), of from 30 to 70.

10. Laminated safety glass pane having a predetermined breaking location according to one or more of Claims 1 to 9, **characterised in that** the intermediate layer contains a casting resin and/or a polymeric film.

11. Laminated safety glass pane having a predetermined breaking location according to Claim 10,
**characterised in that** the casting resin for the production of the intermediate layer is based on polyacrylate.

12. Laminated safety glass pane having a predetermined breaking location according to one or more of Claims 1 to 11, **characterised in that** the laminated safety glass pane contains an edge seal made of a thermoplastic material which is permanently plastic at room temperature.

13. Process for the production of a laminated safety glass pane having a predetermined breaking location,
**characterised in that**
a) predetermined breaking lines and at least one region which subsequently contains the hard bodies (the impact point) are cut or punched out from a polymeric film,
b) a thermally toughened glass plate is provided with an edge seal,
c) the film prepared under a) is laid as an intermediate layer onto the glass plate,
d) one or more hard bodies having a hardness greater than that of the glass is/are applied to the glass plate at the impact point,
e) a second thermally toughened glass plate is laid down onto this arrangement, and
f) the resulting glass plate laminate is pressed.

14. Use of a laminated safety glass pane having a predetermined breaking location according to one of Claims 1 to 11 in buildings and in rail, road and water vehicles.

## Revendications

1. Vitre en verre de sécurité feuilleté avec un point de rupture intentionnellement prévue et un point d'impact, comprenant au moins deux vitres de verre précontraintes et une couche intermédiaire, des lignes de rupture intentionnellement prévue (= point de rupture intentionnellement prévue) formée par des discontinuités dans la couche intermédiaire étant présentes pour créer une sortie de secours, et la couche intermédiaire pouvant être en un endroit (par exemple d'un côté) inséparable du verre de sécurité feuilleté et formée de façon flexible de telle sorte qu'en cas de sectionnement les lignes de rupture intentionnellement prévue il se forme un plan de sortie de secours relié au reste de la vitre de façon indéchirable et pivotant à la manière d'une charnière, **caractérisée en ce que** la vitre en verre feuilleté comprend dans la couche intermédiaire en au moins un endroit (le point d'impact) un ou plusieurs corps réalisés dans un matériau dont la dureté est supérieure à celle du verre utilisé.

2. Vitre en verre de sécurité feuilleté avec un point de rupture intentionnellement prévue selon la revendication 1, **caractérisée en ce que** l'on choisit comme vitres de verre des verres plats sélectionnés dans le groupe des verres calcino-alcalins tels que le verre à chaux sodée, ou des verres au borosilicate.

3. Vitre en verre de sécurité feuilleté avec un point de rupture intentionnellement prévue selon la revendication 1 ou 2, **caractérisée en ce que** la dureté Mohs du ou des corps durs au point d'impact est supérieure à 6.

4. Vitre en verre de sécurité feuilleté avec un point de rupture intentionnellement prévue selon la revendication 3, **caractérisée en ce que** la dureté Mohs du ou des corps durs au point d'impact est supérieur à 7.

5. Vitre en verre de sécurité feuilleté avec un point de rupture intentionnellement prévue selon l'une ou plusieurs des revendications 1 à 4, **caractérisée en ce que** les corps durs sont composés de grains ou de billes.

6. Vitre en verre de sécurité feuilleté avec un point de rupture intentionnellement prévue selon l'une ou plusieurs des revendications 1 à 5, **caractérisée en ce que** le ou les corps durs au point d'impact se composent de carbure de silicium et/ou de corindon.

7. Vitre en verre de sécurité feuilleté avec un point de rupture intentionnellement prévue selon l'une ou plusieurs des revendications 1 à 6, **caractérisée en ce que** les corps durs ont une taille inférieure de 0,1 à 0,3 mm à l'épaisseur de la couche intermédiaire.

8. Vitre en verre de sécurité feuilleté avec un point de rupture intentionnellement prévue selon l'une ou plusieurs des revendications 1 à 7, **caractérisée en ce que** les corps durs sont enrobés dans du polyisobutylène.

9. Vitre en verre de sécurité feuilleté avec un point de rupture intentionnellement prévue selon l'une ou plusieurs des revendications 1 à 8, **caractérisée en ce que** la couche intermédiaire est formée dans une matière plastique ayant les caractéristiques mécaniques de rupture suivantes : résistance à la rupture au moins 4 MPa, allongement à la rupture au moins 200 %, résistance à la déchirure au moins 6 N/mm, dureté Shore-A (déterminée selon DIN 53505 sur un échantillon de 6 mm d'épaisseur à 23 °C) 30 à 70.

10. Vitre en verre de sécurité feuilleté avec un point de rupture intentionnellement prévue selon l'une ou plusieurs des revendications 1 à 9, **caractérisée en ce que** la couche intermédiaire comprend une résine coulée et/ou une pellicule de polymère.

11. Vitre en verre de sécurité feuilleté avec un point de rupture intentionnellement prévue selon la revendication 10, **caractérisée en ce que** la résine coulée utilisée pour fabriquer la couche intermédiaire est à base de polyacrylate.

12. Vitre en verre de sécurité feuilleté avec un point de rupture intentionnellement prévue selon l'une ou plusieurs des revendications 1 à 11, **caractérisée en ce que** la vitre en verre de sécurité feuilleté comprend un joint de bordure réalisé dans un matériau thermoplastique à plasticité durable.

13. Procédé pour fabriquer une vitre en verre de sécurité feuilleté avec un point de rupture intentionnellement prévue, **caractérisé en ce que**
a) des lignes de rupture intentionnellement prévue et au moins un domaine qui recevra plus tard les corps durs (point d'impact) sont découpés ou estampés dans une pellicule en polymère,
b) une plaque en verre précontraint thermiquement est munie d'un joint de bordure,
c) la pellicule préparée à l'étape a) est posée sur la plaque de verre pour servir de couche intermédiaire,
d) un ou plusieurs corps durs dont la dureté est supérieure à celle du verre sont placés sur la plaque en verre au point d'impact,
e) une deuxième plaque en verre précontraint thermiquement est placée sur cet arrangement, et
f) l'assemblage de vitres en verre ainsi obtenu est pressé.

14. Utilisation d'une vitre en verre de sécurité feuilleté avec un point de rupture intentionnellement prévue selon l'une des revendications 1 à 11 dans des bâtiments, des véhicules ferroviaires, des véhicules routiers et des véhicules aquatiques.
